# EUROPÄISCHE PATENTANMELDUNG

(11) **EP 1 571 384 A1**
(43) Veröffentlichungstag der Anmeldung: **07.09.2005**
(21) Anmeldenummer: 04004641.9
(22) Anmeldetag: 01.03.2004
(51) Int. Cl.: F16L 13/16, F16L 13/11, F16L 21/03, F16L 25/10

(54) **Abzugsrohr, insbesondere für Kamine**

(71) Anmelder: Rella, Günter, 39040 Termeno (BZ) (IT)
(72) Erfinder: Rella, Günter, 39040 Termeno (BZ) (IT)
(74) Vertreter: Faraggiana, Vittorio

(57) **Zusammenfassung**

Beschrieben wird ein Abzugsrohr (1), insbesondere für Kamine, bestehend aus mindestens zwei miteinander zu verbindenden Rohrteilen (2,3).

Gemäß der Erfindung besitzt ein Rohrteil gegenüber dem zweiten Rohrteil (2) einen leicht aufgeweiteten Endbereich (4), in dem der entsprechende Endbereich (5) des anderen Rohrteils (3) aufgenommen ist, wobei der Endbereich (4) des ersten Rohrteils (2) durch mindestens zwei Rinnen (6,7) in Umfangsrichtung an das zweite Rohrteil (3) dicht angepresst ist, wobei die mindestens zwei Rinnen (6,7) voneinander beabstandet sind und zwischen einander einen ringförmigen Hohlraum (8) bilden.

## Beschreibung

Die vorliegende Erfindung bezieht sich auf ein Abzugsrohr, insbesondere für Kamine, gemäß dem Oberbegriff des Anspruchs 1.

Beim Abzug von heißen Abgasen, wie insbesondere bei Kaminen nach der Verbrennung von festen (Holz oder ähnlichen), flüssigen (Gasöl, Kerosin und ähnlichen) und gasförmigen (Methan, Flüssiggas und ähnlichen) Brennstoffen besteht das Problem, dass einzelne zusammenbauende Teile eines Abzugsrohrs die Dichtigkeit unter Einfluss von Hitze und den Beanspruchungen verlieren und somit in der Zeit ihre Betriebstüchtigkeit abnimmt bzw. nicht mehr gegeben ist.

Die Aufgabe der vorliegenden Erfindung liegt daher darin, Dichtigkeitsprobleme der herkömmlichen Abzugsrohre möglichst zu beseitigen und ein Abzugsrohr zu schaffen, das einfach in der Bearbeitung ist und einen möglichst geringen Aufwand in der Ausführung erfordert.

Diese Aufgabe wird erfindungsgemäß in einem Abzugsrohr durch den kennzeichnenden Teil des Anspruchs 1 gelöst.

Bei dem erfindungsgemäßen Abzugsrohr handelt es sich um eine Konstruktion eines Kaminsystems aus rostfreiem Stahl mit einer einzigen Wandung mit beispielsweise zwei Blechstärken jeweils von 0,4mm, 0,5mm, 0,6 mm und 1,0 mm.

Die einzelnen Kaminbestandteile werden mit einem Steckverbindungssystem ohne Zuhilfenahme von Flanschen, Verschraubungen oder Befestigungsringen zusammengebaut.

Der Verbindungsbereich von zwei Bestandteilen verfügt über zwei versenkte, umlaufende Rinnen, mit einer Tiefe, die aufgrund der Blechstärke veränderlich ist, und voneinander beispielsweise mit einem Abstand von 30 mm angeordnet sind und das Ziel haben, die Dichtigkeit mit einem positiven Druck von 200 Pa und die Stabilität des Abzugsrohres sicherzustellen, wobei sie überdies den Austritt von etwaigen, sich gebildeten Kondensflüssigkeiten verhindern müssen.

Die Dichtigkeit wird durch Rollen zur Ausführung der versenkten Rinnen des Verbindungsbereiches am beispielsweise eingeschobenen Rauchkanal ausgeführt.

Die Dichtigkeit und das leichte Einschieben der einzelnen Bestandteile bei der Herstellung eines Kamins wird durch eine besondere, hitzebeständige Spezialpaste sichergestellt.

Die Herstellung, insbesondere der Zusammenbau der einzelnen Bestandteile wird von Hand aus ohne Zuhilfenahme von Werkzeugen und Maschinen durchgeführt.

Die Durchmesser und die Länge der einzelnen Bestandteile des Abzugsrohrs ändern sich in Abhängigkeit der Notwendigkeit des Einbaues und der Höhe beispielsweise des Gebäudes, wo ein Kamin eingebaut werden soll.

Bevorzugter Weise ist das verwendete Material für das Abzugsrohr ein Stahl AISI 316 mit einer Blechstärke von 0,4mm, 0,5mm 0,6 mm und 1,0 mm. Der Durchmesser des Rauchkanals ist aufgrund der Notwendigkeiten veränderlich und beträgt beispielsweise 120 mm. Auch der Durchmesser des Verbindungsbereiches ändert sich aufgrund des Durchmessers des Rauchkanals (beispielsweise mit einem Durchmesser des Rauchkanals von 120 mm wird der Durchmesser des Verbindungsbereiches 122,4 mm betragen).

In einer bevorzugten Ausführungsform beträgt die Tiefe der versenkten Rinnen 1,3 mm, während sich deren Breite in Längsrichtung des Rohres 3,0 mm beträgt. Die Länge eines einzelnen Abzugsrohrs ist aufgrund der Notwendigkeiten des Einbaus und der Höhe des Gebäudes veränderlich.

Die Einschublänge des Rauchkanals in den Verbindungsbereich beträgt beispielsweise 75 mm, während die Dichtigkeit bei einem positiven Druck 200 Pa beträgt. Somit ist in der Funktionstüchtigkeit das Abzugsrohr geeignet, die Verbrennungsprodukte von festen (Holz oder ähnlichen), flüssigen (Gasöl, Kerosin und ähnlichen) und gasförmigen (Methan, Flüssiggas und ähnlichen) Brennstoffen aufzunehmen.

Das Abzugsrohr kann verwendet werden für Wärmeerzeuger mit Nass- (Kondens-) und Trockenverfahren und ist daher dicht gegenüber den sich bildenden Flüssigkeiten aufgrund der Kondensation. Die Verbindungen, wie oben erwähnt, erfolgen über Einfüge- und/oder Steckverfahren ohne Zuhilfenahme von Manschetten, Flanschen, Schraubverbindungen oder Befestigungsringen. Die Dichtigkeit wird durch zwei gepresste Stellen und zwei Luftpolstern sichergestellt.

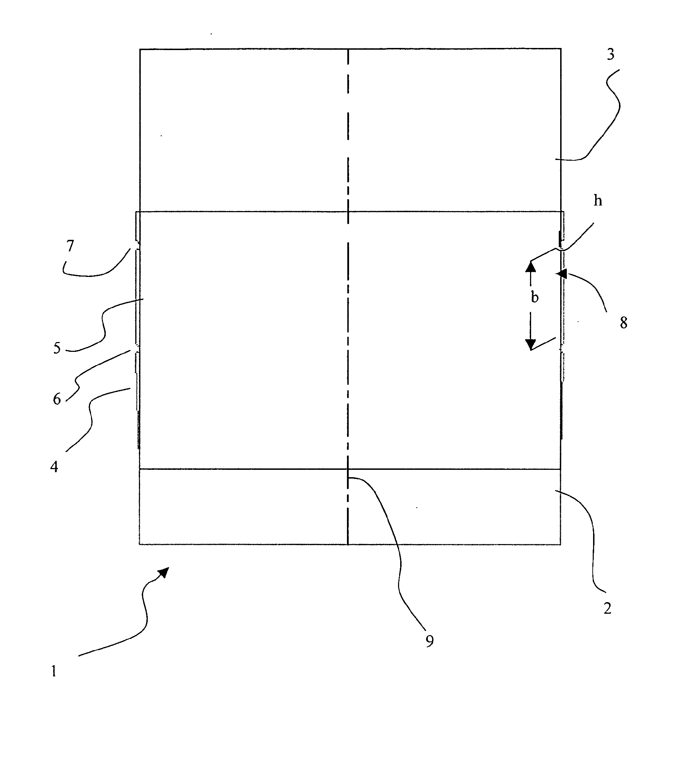

Die Vorteile des erfindungsgemäßen Abzugsrohrs sind wie folgt:
Die Verbindungen erfordern keinerlei Dichtungen mit dem Vorteil, dass sie keine Elemente und/oder Materialien wie etwa Gummiringen, Isolierpaste und ähnlichen besitzen, die sich im Verlaufe der Zeit und unter Wärmeeinwirkung oder mechanischen Beanspruchungen abnutzen.
Leichtigkeit und verkürzte Zeiten beim Einbau zur Herstellung des Kamins, da die einzelnen Elemente nur ineinander eingebracht werden, ohne Schraubenmanschetten oder Flanschen abringen zu müssen und ohne die einzelnen Bestandteile mit Gewinden versehen zu müssen oder die einzelnen Befestigungslängen befestigen zu müssen.
Die Länge der einzelnen Bestandteile ist je nach den einzelnen Bedürfnissen des Verbrauchers veränderlich, da die Elemente an einer Seite ganz einfach mit einer beliebigen Länge zugeschnitten werden können und keine Standardabmessungen in Betracht gezogen werden müssen.
Zwei ringförmige Rinnen am Verbindungsbereich des Abzugsrohrs und die Luft innerhalb der zwischen den Rinnen gebildeten Hohlraumes bildendes Isoliermittel, verhindern den Austritt der Verbrennungsprodukte, wobei so die Dichtigkeit sichergestellt wird und das Durchsickern von etwaigen Kondenswasser vermieden wird.
Ein kleiner Platzbebedarf besteht innerhalb des zur Verfügung stehenden technischen Raumes, in dem das Abzugsrohr angebracht wird, da die Verbindungen steckartig erfolgen, die daher nicht soviel Raum beanspruchen, wie die Befestigungsmanschetten oder Schraubenmanschetten, die Schraubflanschen oder die Befestigungsringe.
Der verwendete Stahl ist mit einem beliebigen anderen verwendeten Stahl zur Herstellung von anderen Kaminen und anderen Konstruktionsarten verwendbar.
Weitere Einzelheiten und Merkmale gehen aus den Patentansprüchen und der Beschreibung einer bevorzugten, in der beigefügten Zeichnung dargestellten Ausführungsform hervor. In der Zeichnung zeigt die einzige Figur einen Längsschnitt eines Abzugsrohrs im Verbindungsbereich von zwei Rohrteilen.
In der Zeichnung ist mit der Bezugsziffer 1 ausschnittsweise ein Abzugsrohr gemäß der vorliegenden Erfindung angegeben.
Das Abzugsrohr 1 besteht aus mindestens einem Rohrabschnitt 2 und einem Rohrabschnitt 3. Der Rohrabschnitt 2 nimmt an seinem erweiterten Ende das entsprechende Ende 5 des Rohrabschnittes 3, beispielsweise eines Rauchkanals auf. Das ausgeweitete Ende 4 wird an zwei voneinander beabstandeten Stellen umfangsgemäß durch Rollen auf die Außenseite des Endbereiches 5 des Rohrs 3 angepresst, womit eine Einpressrinne 6 und eine Einpressrinne 7 entstehen, die um das Abzugsrohr herum derart angeordnet sind, dass zwischen den Wänden des Endbereiches 4 und des Endbereiches 5 ein ringförmiger Hohlraum 8 mit einer Höhe h in Radialrichtung gegenüber der Rohrachse 9 und einer Breite b in Axialrichtung entsteht.

## Patentansprüche

1. Abzugsrohr, insbesondere für Kamine, bestehend aus mindestens zwei miteinander zu verbindenden Rohrteilen, **dadurch gekennzeichnet, dass** ein Rohrteil gegenüber dem zweiten Rohrteil einen leicht aufgeweiteten Endbereich besitzt, in dem der entsprechende Endbereich des anderen Rohrteils aufgenommen ist, wobei der Endbereich des ersten Rohrteils durch mindestens zwei Rinnen in Umfangsrichtung an das zweite Rohrteil dicht angepresst ist, wobei die mindestens zwei Rinnen voneinander beabstandet sind und zwischen einander einen ringförmigen Hohlraum bilden.

2. Abzugsrohr nach Anspruch 1, **dadurch gekennzeichnet, dass** zur Abdichtung eine Dichtpaste verwendet wird.

3. Abzugsrohr nach Anspruch 2, **dadurch gekennzeichnet, dass** die Dichtpaste aus einem selbsthärtenden Material besteht.

4. Verfahren zur Herstellung eines Abzugrohrs nach Anspruch 1, **dadurch gekennzeichnet, dass** von zwei Rohrabschnitten eines mit einer gegenüber dem einzusteckenden Ende des anderen Rohrabschnittes erweiterten Ende das entsprechende Ende des anderen Rohrabschnittes aufnimmt, dass die erweiterte Wandung nach Einstecken des anderen Rohrabschnittes an die Wandung des eingesteckten Rohrabschnittes mindestens längs zwei Umfangsrinnen derart dicht angepresst wird, dass sich zwischen den beiden Rillen ein Ringhohlraum bildet.

5. Verfahren nach 4, **dadurch gekennzeichnet, dass** das Anpressen durch ein Rollverfahren erfolgt.
